# EUROPÄISCHE PATENTSCHRIFT

(11) **EP 0 815 158 B1**
(45) Veröffentlichungstag und Bekanntmachung des Hinweises auf die Patenterteilung: **23.01.2002**
(21) Anmeldenummer: 96907365.9
(22) Anmeldetag: 06.03.1996
(51) Int. Cl.: C08G 63/78

(54) **VERFAHREN ZUR KONTINUIERLICHEN HERSTELLUNG VON THERMOPLASTISCHEN POLYESTERN**
THERMOPLASTIC POLYESTER CONTINUOUS PRODUCTION PROCESS
PROCEDE DE PRODUCTION EN CONTINU DE POLYESTERS THERMOPLASTIQUES

(30) Priorität: 16.03.1995 DE 19509551
(43) Veröffentlichungstag der Anmeldung: 07.01.1998
(73) Patentinhaber: BASF AKTIENGESELLSCHAFT, 67056 Ludwigshafen (DE)
(72) Erfinder: BRAUNE, Peter, D-55234 Erbes-Büdesheim (DE)
(86) Internationale Anmeldenummer: EP9600941
(87) Internationale Veröffentlichungsnummer: WO9628492

(56) Entgegenhaltungen:
- EP-A- 0 378 884
- EP-A- 0 431 977
- CH-A- 446 725
- DE-A- 2 514 116
- GB-A- 1 445 034
- GB-A- 2 184 129

## Beschreibung

Die Erfindung betrifft ein Verfahren zur kontinuierlichen Herstellung von thermoplastischen polyalkylenterepthalaten bzw. - isophthalaten, indem man
a) in einer ersten Stufe eine Dicarbonsäure oder deren Ester bzw esterbildende Derivate mit einem molaren Überschuß einer Dihydroxyverbindung verestert bzw. umestert,
b) in einer zweiten Stufe das gemäß a) erhaltene Umesterungs-bzw. Veresterungsprodukt vorkondensiert und
c) in einer dritten Stufe das aus b) erhältliche Produkt polykondensiert.

Zur Herstellung von Polyestern, insbesondere Polyalkylenterephthalaten werden in großem Umfang sogenannte Umesterungs- bzw. Veresterungs-/Polykondensationsverfahren ausgeführt, wobei in einer ersten Stufe eine Umesterung oder Veresterung stattfindet und in Mindestens einer weiteren Stufe die eigentliche Polykondensation vorgenommen wird (vgl. Chemiefasern/Textilindustrie 40 (1992), 1058-1062 und Ullmann's Enzyklopädie der technischen Chemie, 4. Auf 1. Band 19, S. 61-88).

Aus der DE-A 22 10 655 ist die Veresterung von Terephthalsäure (TPA) mit Diolen, wie 1,4-Butandiol, in Gegenwart von titan-haltigen Katalysatoren mit anschließender Polykondensation in diskontinuierlicher Weise bekannt.

Die diskontinuierliche Herstellung ausgehend von TPA ist aus der DE-A 1135660, DE-A 2120092, DE-A 2621099 und EP-A 46 670 bekannt.

Gemäß der DE-A 35 44 551 führt man die Veresterung in einer Stufe unter vermindertem Druck aus bei Temperaturen von 235-250°C. In einer zweiten Stufe wird unter vermindertem Druck vorkondensiert und anschließend polykondensiert.

Die Veresterung von TPA mit Diolen in Gegenwart von Zinn-Katalysatoren ist aus der US-B 3936 421 und US-B 4329 444 bekannt.

Verfahren zur Herstellung von Polyestern ausgehend von Dimethylterephthalat (DMT) und Diolen sind u.a. aus der DE-A 2514116 und DE-A 2738 093 bekannt.

Aus dem Stand der Technik ergibt sich, daß die kontinuierliche Herstellung von Polyestern allgemein problematisch ist, ganz besonders im Hinblick auf die Herstellung von Polyestern ausgehend von Terephthalsäure sowie überwiegend 1,4-Butandiol als Monomeren. Derzeit gibt es weltweit keine Anlage welche kontinuierlich Polyester aus TPA und überwiegend Butandiol enthaltenden Diolen herstellt.

Darüber hinaus sind keine Verfahren bekannt, in denen wahlweise der Polyester ausgehend von TPA oder DMT hergestellt werden kann. Der vorliegenden Erfindung lag daher die Aufgabe zugrunde, ein kontinuierliches Verfahren zur Herstellung von Polyestern zur Verfügung zu stellen, insbesondere ausgehend von Terephthalsäure und ein Verfahren zur Verfügung zu stellen, in welchem der Polyester wahlweise ausgehend von TPA oder DMT herstellbar ist. Die aus diesem Verfahren erhältlichen Polyester sollen unabhängig vom Einsatzstoff ein weitestgehend einheitliches Eigenschaftspektrum wie niedriger Gehalt an Katalysator, eine möglichst geringe Anzahl an Carboxylendgruppen aufweisen sowie thermisch und hydrolytisch stabil sein. Darüber hinaus soll das Molgewicht der Polyester möglichst keiner Beschränkung unterliegen.

Überraschenderweise wurde gefunden, daß diese Aufgabe gemäß Anspruch 1 gelöst werden kann.

Die Stufe a) des Verfahrens wird als sogenannte Umesterungs -bzw Veresterungsreaktion bezeichnet. Diese wird in Mindestens zwei, vorzugsweise Mindestens drei Temperaturzonen durchgeführt. Die Temperatur der folgenden Zone sollte hierbei 1-40, vorzugsweise 2-30 und insbesondere 5-10°C höher als die Temperatur der vorherigen Zone sein. Der Temperaturbereich für die gesamte Veresterungsreaktion liegt im allgemeinen (je nach Einsatzstoff) bei 200 bis 260, vorzugsweise 210-250 und insbesondere bei 220 bis 240°C, der Druck beträgt im allgemeinen von 1 bis 10, vorzugsweise von 1 bis 4 und insbesondere von 1 bis 2 bar.

Vorzugsweise führt man die Stufe a) des Verfahrens so aus, daß man in Mindestens zwei Temperaturzonen bei weitestgehend gleichen Druckverhältnissen in den einzelnen Zonen arbeitet. Die technischen Voraussetzungen wie Apparaturen (z.B. in Form von Kesselkaskaden) zur Schaffung von unterschiedlichen Temperäturzonen sind dem Fachmann bekannt, weshalb sich weitere Einzelheiten hierzu erübrigen.

Als Dihydroxyverbindungen können aliphatische, oder cycloaliphatische Diole eingesetzt werden.

Vorteilhaft weisen diese 2 bis 20, insbesondere 2 bis 12 C-Atome auf, besonders bevorzugt werden aliphatische Diole mit 2 bis 12 C-Atomen, insbesondere mit 2 bis 6 C-Atomen.

Beispielhaft seien hier Ethandiol (Ethylenglykol), 1,3-Propandiol, 1,4-Butandiol, Cyclohexandiole, und genannt, wovon Ethandiol und 1,4-Butandiol besonders bevorzugt sind.

Als aromatische Dicarbonsäuren seien Isophthalsäure, Phthalsäure, Terephthalsäure, alkysubstituierte Derivate der vorstehend genannten Säuren, genannt, wovon Iso- und Terephthalsäure oder deren Mischungen besonders bevorzugt werden.

Aus dem Vorstehenden ergibt sich, daß nach dem erfindungsgemäßen Verfahren vorteilhaft Polyalkylenterephthalate bzw. Polyalkylenisophthalate oder Copolyester mit Tere- und Isophthalsäure als Säurekomponente hergestellt werden können.

Zusätzlich zu den vorstehend genannten Komponenten können die erfindungsgemäß hergestellten Polyester auch noch geringere Mengen, vorteilhaft weniger als 10 Mol-%, bezogen auf die jeweilige Monomerkomponente, an weiteren Einheiten enthalten, die sich beispielsweise von Hydroxycarbonsäuren ableiten.

Für die Umsetzung wird üblicherweise ein molarer Überschuß von Diol eingesetzt, um das Estergleichgewicht in der gewünschten Form zu beeinflussen. Die Molverhältnisse Dicarbonsäure bzw. Dicarbonsäureester : Diol betragen üblicherweise 1:1,1 bis 1:3,5 vorzugsweise 1:1,2 bis 1:2,2. Ganz besonders bevorzugt sind Molverhältnisse Dicarbonsäure:Diol von 1:1,5 bis 1:2, sowie Diester:Diol von 1:1,25 bis 1,5.

Es ist jedoch auch möglich mit einem geringeren Überschuß an Diol in der ersten Zone die Esterreaktion durchzuführen und entsprechend in den weiteren Temperaturzonen weitere Mengen Diol zuzugeben. In der bevorzugten Ausführungsform des erfindungsgemäßen Verfahrens mit drei Temperaturzonen wird das gesamte Diol in 3 Zonen prozentual wie folgt aufgeteilt: 60 bis 85 (1), 10 bis 25 (2) und 5-15 (3), vorzugsweise: 70 bis 80 (1), 10 bis 20 (2), 5 bis 10 (3).

Die Verweilzeiten betragen für die gesamte Stufe a) 140 bis 300, vorzugsweise von 150 bis 260 und insbesondere von 160 bis 220 Min., die Verweilzeit für die erste Zone beträgt von 100 bis 180, vorzugsweise von 110 bis 150; für die zweite Zone von 65 bis 140, vorzugsweise von 65 bis 110 Min. Für die bevorzugte Ausführungsform mit 3 Zonen beträgt die Verweilzeit in der 3. Zone 15 bis 40, vorzugsweise 15 bis 30 Min, wobei sich die Verweilzeiten in der 2. Zone entsprechend verringern und in der 1. Zone wie oben ausgeführt beibehalten werden.

In der bevorzugten Ausführungsform des erfindungsgemäßen Verfahrens nehmen die Verweilzeiten von der ersten Zone zur dritten Zone im Verhältnis vorzugsweise 6:3:1 ab.

In der Stufe a) des erfindungsgemäßen Verfahrens können weiterhin übliche Katalysatoren, vorzugsweise in die erste Temperaturzone zudosiert werden. Bevorzugte Katalysatoren sind Titanverbindungen und Zinnverbindungen wie sie u.a. aus den US 39 36 421, US 43 29 444 Patentschriften bekannt sind. Als bevorzugte Verbindungen seinen Tetrabutylorthotitanat und Triisopropyltitanat sowie Zinn-di-octoat genannt, welche üblicherweise in der Stufe a) in Mengen von 20 bis 80, vorzugsweise von 20 bis 70 und insbesondere von 30 bis 70 ppm (bezogen auf das Metall) eingesetzt werden.

Zur weiteren Reduzierung des Carboxylendgruppengehaltes des Polyesters kann es vorteilhaft sein, bei der Umsetzung der Ausgangsmonomeren 1 bis 10 mmol, vorzugsweise 2 bis 7 mmol und insbesondere 2,5 bis 5 mmol, pro kg Polyester, einer Alkalimetallverbindung oder Erdalkalimetallverbindung (berechnet als Alkalimetall bzw. Erdalkalimetall) zuzugeben. Derartige Verbindungen werden in der DE-A 43 33 930 vorgeschlagen. Als bevorzugte Verbindungen seien Natriumcarbonat, Natriumacetat, und Natriumalkoholate, insbesondere Natriummethanolat genannt.

Für eine bessere Farbe (Farbaufhellung) und Wärmestabilisierung kann es vorteilhaft sein, weitere Zusatzstoffe wie Phosphine, Phosphite und/oder sterisch gehinderte Phenole in Mengen bis zu 1 Gew.-%, vorzugsweise bis zu 0,5 Gew.-% zuzugeben. Entsprechende Verbindungen sind dem Fachmann bekannt. Beispielhaft seien Triphenylphosphin, Triphenylphosphit, Di-tert.-Butylphenol und Di(tri-t-butylphenol) genannt.

Die Umesterungs- bzw. Veresterungsprodukte werden anschießend in die Vorkondensationsstufe b) kontinuierlich überführt.

Diese weist Mindestens vier Temperaturzonen auf. Die Temperatur der folgenden Zone liegt hierbei 2-30 und insbesondere 5-20°C höher als die Temperatur der vorherigen Zone. Der Temperaturbereich für die gesamte Vorkondensation liegt im allgemeinen (je nach Einsatzstoffen ) bei 220 bis 300, vorzugsweise bei 225 bis 290 und insbesondere bei 240 bis 290°C.

Bevorzugt erfolgt die Vorkondensation in der Weise, daß in der ersten Zone der Druck 0,5 bis 1 bar, vorzugsweise 0,6 bis 0,8 bar beträgt und in der zweiten bzw. letzten Zone 20 bis 200, vorzugsweise 25 bis 150 mbar und insbesondere 50 bis 150 mbar beträgt. Technisch kann hierfür z.B. ein senkrecht stehender Rohrbündelreaktor verwendet werden, andere Reaktoren zur Durchführung sind dem Fachmann bekannt.

Die Verweilzeiten betragen für die gesamte Stufe b) des Verfahrens von 10 bis 80, vorzugsweise von 15 bis 50 und insbesondere von 20 bis 40 Min.
Im der erfindungsgemäßen Verfahren werden vier Temperaturzonen verwendet, wobei von Zonen zu Zone die Temperatur in den oben beschriebenen Verhältnissen steigt und der Druck von der ersten bis zur vierten Zone innerhalb der beschriebenen Grenzen reduziert wird. Die vierte Zone besteht bei dieser bevorzugten Ausführungsform des Rohrbündelwärmetauschers aus einer Vorrichtung zur Trennung von Dampf- und Flüssigphase (auch als Brüdentrenngefäße bezeichnet), wobei das Verhältnis des Volumens des Trenngefäßes zum Volumen in den Rohren vorzugsweise 5 bis 15: 1, insbesondere 8 bis 13: 1 beträgt.

Die Volumenverhältnisse der ersten drei Zonen sind so gestaltet in dieser besonders bevorzugten Ausführungsform, daß die erste Zone von 30 bis 60, vorzugsweise 50 %, die zweite Zone von 20 bis 40, vorzugsweise 30 % und die dritte Zone von 10 bis 30, vorzugsweise 20 % anteilig an Volumen( Volumenverhältnisse) ausmachen. Nachstehend sind die Temperaturbereiche, Druckbereiche und Verweilzeiten für die erfindungsgemäße Ausführungsform des Verfahrens aufgeführt:
1. Zone: Temperatur von 240 bis 270, vorzugsweise von 240 bis 250°C, Druck von 0,6 bis 0,9, vorzugsweise von 0,7 bis 0,9 bar.
   Verweilzeit von 10 bis 20, vorzugsweise von 13 bis 17 Min.
2. Zone: Temperatur von 240 bis 280, vorzugsweise von 250 bis 270°C, Druck von 0,2 bis 0,6, vorzugsweise von 0,3 bis 0,5 bar.
   vorzugsweise von 7 bis 11 Min.
3. Zone: Temperatur von 250 bis 290 vorzugsweise von 260 bis 280°C, Druck von 0,1 bis 0,3, vorzugsweise von 0,1 bis 0,25 bar.
   vorzugsweise von 4 bis 8 Min.
4. Zone: Temperatur von 260 bis 300 vorzugsweise von 270 bis 285°C, Druck von 0,015 bis 0,2, vorzugsweise von 0,025 bis 0,15 bar.
   vorzugsweise von 4 bis 8 Min.

Die vorstehend bei Stufe a) des Verfahrens genannten Katalysatoren und weitere Zusatzstoffe können in den genannten Mengen in die Stufe b) des Verfahrens zudosiert werden.

Nach der Stufe b) des erfindungsgemäßen Verfahrens weist das Polyesterpräpolymer eine Viskositätszahl von 15 bis 40, vorzugsweise von 20 bis 30 ml/g aus, gemessen als 0,5 Gew.-% Lösung in Phenol/o-Dichlorbenzol (1:1) gemäß DIN 53728, Teil 3 (1985) bei 25°C.

Das Polyesterpräpolymer wird anschließend in die Stufe c) des erfindungsgemäßen Verfahrens überführt. Diese wird vorzugsweise einstufig durchgeführt bei Temperaturen von 240 bis 290, vorzugsweise von 240 bis 270 und insbesondere 240 bis 265°C. Der Druck beträgt von 0,3 bis 10, vorzugsweise 0,3 bis 5 und insbesondere 0,3 bis 2 mbar.

Die Verweilzeiten betragen üblicherweise 30 bis 180, vorzugsweise von 35 bis 150 Min.

Während der Polykondensation kann man vorzugsweise eine Oberflächenerneuerung des Produktes vornehmen. Oberflächenerneuerung bedeutet, daß ständig neues Polymeres an die Oberfläche der Schmelze gelangt, so daß der Austritt des Diols erleichtert wird.

Diese beträgt vorzugsweise 1 bis 20 und insbesondere 1,5 bis 6 m²/kg Produkt und Minute.

Es kann weiterhin von Vorteil sein, auch in dieser Stufe des Verfahrens Katalysatoren und andere Zusatzstoffe zuzugeben, wie sie vorstehend beschrieben wurden.

Das Produkt wird anschließend mittels üblicher Vorrichtungen entgast, als Strang ausgetragen, gekühlt und zu Granulat verarbeitet.

Nach der Polykondensation weist der Polyester im allgemeinen eine Viskositätszahl von 60 bis 160, vorzugsweise von 70 bis 155 ml/g auf, bestimmt in einer 0,5 gew.%igen Lösung in einem Phenol/o-Dichlorbenzolgemisch (Gew.-Verh. 1:1 bei 25°C) gemäß DIN 53728, 3. Teil (1985).

Der Carboxylendgruppengehalt (in mval/kg Polyester) beträgt in der Regel von 10 bis 50, vorzugsweise von 15 bis 40 und insbesondere von 15 bis 30.

Dieser wird üblicherweise durch Titrationsmethoden (z.B.Potentiometrie) bestimmt. Der Katalysatorrestgehalt beträgt vorteilhafterweise nicht mehr als 150, insbesondere nicht mehr als 120 ppm, bezogen auf das Metall (z.B. Ti oder/und Sn).

Zur Erzielung höherer Molekulargewichte ist es darüber hinaus möglich, daß man den Polyester einer weiteren thermischen Behandlung unterwirft (Nachkondensation in fester Phase, auch als Temperung bezeichnet).

Dazu wird das Granulat in fester Phase unter Inertgas kontinuierlich oder diskontinuierlich bei einer Temperatur unterhalb des Schmelzpunktes, z. B. von 170 bis 220°C, bis zur gewünschten Viskositätszahl kondensiert.

Für die diskontinuierliche Festphasenkondensation können z.B. Schneckenmischer oder Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas bevorzugt Stickstoff verwendet wird.

Die Viskositätszahl, gemessen an einer 0,5 gew.-%igen Lösung von o-Dichlorbenzol/Phenol im Verhältnis 1:1 bei 25°C, liegt nach der Nachkondensation in fester Phase im allgemeinen im Bereich von 100 - 300, vorzugsweise 150 bis 220 ml/g. Durch das erfindungsgemäße Verfahren können Polyester sowohl ausgehend von Dicarbonsäuren wie z. B. Terephthalsäure als auch von Diestern wie z.B. Dimethylterephthalat kontinuierlich hergestellt werden. Die Produkte weisen - unabhängig von Ausgangsstoff eine niedrigen Restkatalysatorgehalt, einen geringen Carboxylendgruppengehalt sowie eine gute thermische und hydrolytische Stabilität auf. Darüber hinaus sind Polyester mit hohem Molgewicht erhältlich.

Nachstehend sei das erfindungsgemäße Verfahren am Beispiel der Herstellung von Polybutylenterephthalat (PBT) erläutert; es sei jedoch betont, daß es entsprechend auch für die Herstellung anderer dem Fachmann bekannter Polyester geeignet ist.

### Beispiele

### 1) Herstellung von Polybutylenterephthalat ausgehend von Terephthalsäure

306 g (1,84 mol) Terephthalsäure (TPA) und 332 g (3,68 mol) 1,4-Butandiol wurden zur Veresterung in die erste Temperaturzone (Rührkessel) eingespeist. Gleichzeitig wurden 30 ppm Ti (als Tetrabutylorthotitanat), bezogen auf 1 kg PBT zugegeben.

Die Temperaturen in den drei Zonen betrugen ansteigend 225/230/235°C, der Druck betrug 1 bar in allen drei Zonen.
Die Verweilzeiten betrugen 125/60/20 Min.

Die hierbei anfallenden Brüden, welche überschüssiges Butandiol, Terephthalsäure, THF und Wasser enthalten, wurden Kolonnen zugeführt, wobei Butandiol und THF zurückgewonnen wurde.

Mit einem Umsatz von > 95% wurde das Veresterungsprodukt dem Boden eines senkrecht stehenden Rohrbündelreaktors zugeführt. In der ersten Zone betrug die Temperatur 245°C, der Druck 0,85 bar und die Verweilzeit 15 Minuten.

Das Produkt stieg kontinuierlich in den Röhren nach oben. In der zweiten Zone betrug die Temperatur 260°C, der Druck betrug 0,40 bar, die Verweilzeit betrug 9 Minuten

In der dritten Zone betrug die Temperatur 270 °C, der Druck 0,20 bar und die Verweilzeit 6 Minuten.

In die vierte Zone wurden 60 ppm Ti (als Tetrabutylorthotitanat) zudosiert, bezogen auf 1 kg PBT und 3 ppm Na (als Natriummethanolat, 30 % in Methanol).

Die Temperatur in der vierten Zone betrug 285°C, der Druck 0,08 bar und die Verweilzeit 5,5 Minuten.

Überschüssiges Butandiol und Reaktionsprodukte wie THF und Wasser wurden am oberen Ende des Rohrbündelwärmetauschers abgezogen und aufgearbeitet.

Das Vorkondensat wurde anschließend (bei 280°C) in einen Nachkondensationsreaktor (Stufe c) überführt. Gleichzeitig wurden 30 ppm Ti (als Tetrabutylorthotrianat zudosiert; bezogen auf 1 kg PBT) und 3 ppm Na (als Natriummethanolat 30 %ig in Methanol). Der Druck betrug 0,5 bis 2,5 mbar. Entsprechend trat in der Eintrittszone des Reaktors eine rasche Abkühlung unter gleichzeitigem Viskositätsanstieg des Produktes auf. Bei 250 bis 250°C wurde die Polykondensation beendet.
1a) Bei einer Verweilzeit von 40 Min, 0,5 mbar Druck, 258°C und einer Oberflächenerneuerung von 2,8 m² pro kg PBT und Minute wurde eine Viskositätszahl von 130 ml/g erzielt (gemessen als 0,5 gew.-%ige Lösung in einem (1:1 Gemisch aus Phenol/o-Dichlorbenzol) bei 25°C).
1b) Bei einer Verweilzeit von 105 min, 0,5 mbar, 255°C und 4,8 m² pro kg PBT und Minute wurde eine Viskositatszahl von 155 ml/g erzielt.

### 2. Herstellung von PBT ausgehend von Dimethylterephthalat

194 g (1 mol) DMT und 121,5 g (1,35 mol) 1,4-Butandiol wurden in die 1. Zone eingespeist (Umesterung). Die Verfahrensweise entsprach Beispiel 1 unter folgenden Bedingungen.
Stufe a)
   1. Zone: 180°C, 1 bar, 125 Min
   2. Zone: 190°C, 1 bar, 60 Min
   3. Zone: 205°C, 1 bar, 20 Min
Stufe b)
   1. Zone: 245°C, 0,85 bar, 15 Min
   2. Zone: 260°C, 0,40 bar, 9 Min
   3. Zone: 270°C, 0,20 bar, 6 Min
   4. Zone: 285°C, 0,08 bar, 5,5 Min
Stufe c)
   2a) 258°C, 0,05 mbar, Verweilzeit: 40 Min
      2,8 m²/kg PBT und Minute, VZ: 130 ml/g
   2b) 105 Min Verweilzeit bei 255°C, 0,5 mbar
      4,8 m²/kg PBT und Minute, VZ: 155 ml/g

Der Katalysator wurde beim Eintritt in die 1. Zone der Stufe a) zudosiert: 120 ppm Ti (als Tetrabutylorthotitanol) und 6 ppm Na (als Natriummethanolat, 30 %ig in Methanol).

| Vergleich der Polyesterprodukte aus Beispiel 1 und 2 | | | |
|---|---|---|---|
| Beispiel | VZ (ml/g) | (COOH-Gehalt (mval/kg PBT) | Restkatalysatorgehalt und sonstige Zusatzstoffe (ppm) |
| Beispiel 1a | 130 | 25 | 120 Ti/6 Na |
| 1b | 155 | 30 | 120 Ti/6 Na |
| Beispiel 2a | 130 | 20 | 120 Ti/6 Na |
| 2b | 155 | 28 | 120 Ti/6 Na |

Der Restkatalysatorgehalt wurde durch Röntgenfluoreszenzanalyse bestimmt.

Der COOH-Gehalt (Carboxylendgruppengehalt) wurde bestimmt: 100 mg Polyester wurden in 7 ml Nitrobenzol bei 200°C gelöst. Nach Abkühlung auf 150°C wurden 7 ml eines Gemisches aus 2 mg Kaliumacetat in 1 1 Wasser/Isopropanol (10:90 Gew.-%) zugegeben. Dabei wurde Kalium an die COOH-Gruppen gebunden und Essigsäure freigesetzt, welche anschließend potentiometrisch titriert wurde.

## Patentansprüche

1. Verfahren zur kontinuierlichen Herstellung von thermoplastischen Polyalkylenterephthalaten bzw. Polyalkylenisophtalaten, indem man
a) in einer ersten Stufe eine Dicarbonsäure oder deren Ester bzw esterbildende Derivate mit einem molaren Überschuß einer Dihydroxyverbindung verestert bzw. umestert,
b) in einer zweiten Stufe das gemäß a) erhaltene Umesterungs- bzw. Veresterungsprodukt vorkondensiert und
c) in einer dritten Stufe das aus b) erhältliche Produkt polykondensiert,
**dadurch gekennzeichnet, daß** man die Stufe a) des Verfahrens in mindestens zwei Temperaturzonen durchführt, wobei in der Stufe a) des Verfahrens die Temperatur der folgenden Zone 1-40°C höher als die Temperatur der vorherigen Zone ist und man die Stufe a) des Verfahrens in mindestens zwei Temperaturzonen unter weitestgehend gleichen Druckverhältnissen durchführt und die Stufe b) in mindestens vier Temperaturzonen durchführt und in der Stufe b) des Verfahrens die Temperatur der folgenden Zone 2 - 30°C höher als die Temperatur der vorherigen Zone ist:
1. Zone: Temperatur von 240 bis 270, Druck von 0,6 bis 0,9, bar.
Verweilzeit von 10 bis 20.
2. Zone: Temperatur von 240 bis 280, Druck von 0,2 bis 0,6, bar.
Verweilzeit von 7 bis 11 Min.
3. Zone: Temperatur von 250 bis 290, Druck von 0,1 bis 0,3, bar.
Verweilzeit von 4 bis 8 Min.
4. Zone : Temperatur von 260 bis 300, Druck von 0,015 bis 0,2, bar.
Verweilzeit von 4 bis 8 Min.

2. Verfahren nach Anspruch 1, **dadurch gekennzeichnet, daß** man die Stufe a) des Verfahrens in mindestens 3 Temperaturzonen durchführt.

3. Verfahren nach den Ansprüchen 1 oder 2, **dadurch gekennzeichnet, daß** die Stufe b) in einem senkrecht stehenden Rohrbündereaktor durchgeführt wird.

4. Verfahren nach Anspruch 3, **dadurch gekennzeichnet, daß** die 4. Zone der Stufe b) des senkrecht stehenden Rohrbündelaustauschers aus einer Vorrichtung zur Trennung von Dampf- und Flüssigphase besteht.

5. Verfahren nach Anspruch 4, **dadurch gekennzeichnet, daß** das Verhältnis des Volumens des Trenngefäßes zum Volumen in den Rohren 5 bis 15:1 beträgt.

## Claims

1. A process for the continuous preparation of thermoplastic polyalkylene terephthalates or polyalkylene isophthalates by
a) a first step of (trans)esterifying a dicarboxylic acid or its esters or ester-forming derivatives with a molar excess of a dihydroxy compound,
b) a second step of precondensing the (trans)esterification product of a), and
c) a third step of polycondensing the product of b),
which comprises carrying out step a) of the process in two or more temperature zones, wherein, in step a) of the process, the temperature of a subsequent zone is 1-40°C higher than the temperature of the preceding zone and step a) of the process is carried out in two or more temperature zones under substantially identical pressure conditions and step b) is carried out in four or more temperature zones and in step b) of the process, the temperature of a subsequent zone is 2-30°C higher than the temperature of the preceding zone,
1st zone: temperature from 240 to 270°C, pressure from 0.6 to 0.9 bar.
Residence time from 10 to 20 min.
2nd zone: temperature from 240 to 280°C, pressure from 0.2 to 0.6 bar.
Residence time from 7 to 11 min.
3rd zone: temperature from 250 to 290°C, pressure from 0.1 to 0.3 bar.
Residence time from 4 to 8 min.
4th zone: temperature from 260 to 300°C, pressure from 0.015 to 0.2 bar.
Residence time from 4 to 8 min.

2. A process as claimed in claim 1 wherein step a) of the process is carried out in 3 or more temperature zones.

3. A process as claimed in claim 1 or 2 wherein step b) is carried out in an upright tube bundle reactor.

4. A process as claimed in claim 3 wherein the 4th zone of step b) of the upright tube bundle exchanger comprises an aparatus for separating vapor and liquid phase.

5. A process as claimed in claim 4, wherein the ratio of the capacity of the separating vessel to the capacity in the tubes is from 5:1 to 15:1.

## Revendications

1. Procédé de préparation en continu de polyalkylène-téréphtalates et/ou de polyalkylène-isophtalates, dans lequel
a) dans une première étape, on estérifie ou on transestérifie un acide dicarboxylique ou ses esters ou ses dérivés estérogènes avec un excès molaire d'un composé dihydroxylé,
b) dans une deuxième étape, on précondense le produit d'estérification ou de transestérification obtenu en a), et
c) dans une troisième étape, on polycondense le produit que l'on peut obtenir en b),
**caractérisé en ce que** l'on entreprend l'étape a) du procédé dans au moins deux zones de température, en quoi, dans l'étape a) du procédé, la température de la zone suivante est supérieure de 1 à 40°C à la température de la zone précédente, et l'on entreprend l'étape a) du processus sous des rapports de pression pratiquement identiques, et l'on entreprend l'étape b) dans au moins quatre zones de température, et dans l'étape b) du processus, la température de la zone suivante est de 2 à 30°C supérieure à la température de la zone précédente,
1^{ère} zone: température de 240 à 270°C, pression de 0,6 à 0,9 bar
temps de séjour de 10 à 20 minutes
2^{ème} zone: température de 240 à 280°C, pression de 0,2 à 0,6 bar
Temps de séjour de 7 à 11 minutes
3^{ème} zone: température de 250 à 290°C, pression de 0,1 à 0,3 bar
Temps de séjour de 4 à 8 minutes.
4^{ème} zone: température de 260 à 300°C, pression de 0,015 à 0,2 bar
Temps de séjour de 4 à 8 minutes.

2. Procédé selon la revendication 1, **caractérisé en ce que** l'on entreprend l'étape a) du processus dans au moins 3 zones de température.

3. Procédé selon les revendications 1 ou 2, **caractérisé en ce que** l'étape b) est entreprise dans un réacteur à faisceau de tubes vertical.

4. Procédé selon la revendication 3, **caractérisé en ce que** la 4^{ème} zone de l'étape b) de l'échangeur de chaleur vertical à faisceau de tubes consiste en un dispositif de séparation vapeur-liquide.

5. Procédé selon la revendication 4, **caractérisé en ce que** le rapport du volume de l'espace de séparation au volume intérieur des tubes est de 5 à 15:1.
